# EUROPEAN PATENT APPLICATION

(11) **EP 3 656 898 A1**
(43) Date of publication of application: **27.05.2020**
(21) Application number: 18208084.6
(22) Date of filing: 23.11.2018
(51) Int. Cl.: D01H 4/12, G01L 5/10

(54) **ADJUSTMENT DEVICE AND METHOD FOR ADJUSTING THE CONTACT PRESSURE OF A BELT TENSION ROLLER**

(71) Applicant: Saurer Czech s.r.o., 547 01 Náchod (CZ)
(72) Inventor: Kohl, Ondrej, 549 46 Zábrodí (CZ); Baudys, Josef, 542 33 Rtyne v Podkrkonosí (CZ)
(74) Representative: Morgenthum-Neurode, Mirko

(57) **Abstract**

The invention relates to an adjustment device as well as a method for adjusting the contact pressure applied to a tangential belt by a belt tension roller of a spinning machine between the rotors of two neighbouring spinboxes. To propose an adjustment device which allows a fast and easy adjustment without long service breaks as well as an operation of a spinning machine with reduced wearing of the tangential belt drive unit and a reduced power consumption of the spinning machine, the adjustment device comprises a measuring jig for measuring the contact pressure of the belt tension roller, the measuring jig having two rotor support plates with positioning points for reference to the rotor positions and one measuring probe with a measuring point arranged between both positioning points. The two rotor support plates are arranged in an opposing direction to the measuring probe for securing the position of the measuring jig against the pressure of the belt tension roller applied to the measuring probe at the measuring point. The adjustment device further comprises an adjustment jig for adjusting the contact pressure of the belt tension roller, the adjustment jig having at least two positioning elements for mounting the adjustment jig to the spinning machine, in particular to a wall of the spinbox opposite to the position of the belt tension roller and or the measuring jig, as well as having an adjustment mechanism for adjusting the contact pressure of the belt tension roller using a tool.

## Description

The invention relates to an adjustment device as well as to a method for adjusting the contact pressure applied to a tangential belt by a belt tension roller of a spinning machine between the rotors of two neighbouring spinboxes.

Tangential belts drives are widely used in spinning machines, in particular for transmitting force from a single motor to several output rollers via a tangential drive belt, i.e., to split the power of the motor to a number of processing stations. The output rollers can for example be connected to spinning boxes of open-end rotor spinning machines so that a certain number of spinning boxes arranged in parallel can be driven by a single motor. To ensure a smooth operation of the spinning machine, the tangential belt has to be kept under a tension within given limits, which is typically achieved by at least one, frequently several belt tension rollers between the rotors of two neighbouring spinboxes.

Document DE 101 07 254 A1 discloses a spinning machine with a number of open-end spinning stations, which has a common drive belt for the spinners, as well as with a press unit at each station to press the belt against each spinner. The press unit is operated by a gas or liquid medium. The belt press unit at each of the open-end spinning stations is connected to a reservoir and can be a pneumatic piston or a pneumatic membrane. The belt press unit is controlled from a sector and/or central machine control. The press unit can be operated by a mobile maintenance unit, which travels along the line of spinning stations.

It may be considered a first object of the present invention to propose an adjustment device for adjusting the contact pressure applied to a tangential belt by a belt tension roller, which allows a fast and easy adjustment without long service breaks.

It may be considered another object of the present invention to propose an adjustment device which helps to precisely adjust the pressure of a belt tension roller to a predefined contact pressure to a tangential belt installed in the spinning machine and in contact with the other parts of the tangential belt drive unit of the spinning machine.

It might be finally considered an objective of the present invention to propose an adjustment device which allows an operation of a spinning machine with reduced wearing of the tangential belt drive and/or with a reduced power consumption of the spinning machine.

These and further objectives may be achieved by an adjustment device according to claim 1 or a method according to claim 14. Dependent claims refer to preferred embodiments of the invention.

The adjustment device for adjusting the contact pressure applied to a tangential belt by a belt tension roller of a spinning machine between the rotors of two neighbouring spinboxes comprises a measuring jig for measuring the contact pressure of the belt tension roller, the measuring jig having two rotor support plates with positioning points for reference to the rotor positions and one measuring probe with a measuring point arranged between both positioning points. The two rotor support plates are arranged in an opposing direction to the measuring probe for securing the position of the measuring jig against the pressure of the belt tension roller applied to the measuring probe at the measuring point. The adjustment device further comprises an adjustment jig for adjusting the contact pressure of the belt tension roller, the adjustment jig having at least two positioning elements for mounting the adjustment jig to the spinning machine, in particular to a wall of the spinbox opposite to the position of the belt tension roller and/or the measuring jig, as well as having an adjustment mechanism for adjusting the contact pressure of the belt tension roller using a tool.

The method for adjusting the contact pressure applied by a belt tension roller to a tangential belt of a spinning machine between the rotors of two neighbouring spinboxes comprises the steps of mounting a measuring jig by positioning each of the two rotor support plates on neighbouring rotors of the spinning machine and a measuring probe in contact with a belt tension roller, followed by connecting a tensometric meter to the measuring jig and measuring the force applied to the measuring probe by the belt tension roller, as well as mounting an adjustment jig by positioning two positioning elements on the spinning machine, and finally adjusting the tension of the belt tension roller with the adjustment jig and simultaneously getting readings of the tension force with the measuring jig.

The inventors have recognized that due to wear of the tangential belt of a belt drive unit as well as after installing new components, in particular a new tangential belt, to such a unit of a spinning machine, the tension of the belt has to be readjusted, wherein in particular for a long tangential belt of a spinning machine with a large number of spinboxes it is not enough to detect the tension of the tangential belt at a single position, but to adjust each belt tension roller such that the belt tension at the belt tension roller is within an ideal range. Such an adjustment of the contact pressure applied by each belt tension roller to the tangential belt allows an operation of a spinning machine with reduced wearing of the tangential belt drive unit and/or a reduced power consumption of the spinning machine. A high power consumption and wear due to at least a section of the tangential belt not being operated in an ideal range of the tension can be avoided.

The inventors have further realized that it is advantageous to be able to adjust the pressure of a belt tension roller to a predefined contact pressure to the tangential belt while being installed in the spinning machine and in contact with the other parts of the belt drive unit of the spinning machine, hence considering all influences to the tangential belt. Additionally, the adjustment device according to the invention allows a fast and easy adjustment without long service breaks, reducing the operation costs of the spinning machine.

The adjustment device may be any device or group of devices for measuring and adjusting the contact pressure applied by a belt tension roller to a tangential belt and is particularly suitable for a tangential belt of a spinning machine with multiple spinboxes operated by the tangential belt, especially driving the spinboxes via a rotor. Also, preferably the adjustment device is built for adjusting the applied contact pressure of a belt tension roller arranged between two spinboxes, in particular in the middle between two spinboxes. The contact pressure is generally the pressure applied to the tangential belt by the surface of the belt tension roller. The contact pressure is especially a contact pressing force or a downforce perpendicular to the direction of movement of the belt.

The adjustment device comprises a measuring jig and an adjustment jig, wherein the measuring jig is provided for measuring the contact pressure currently applied by the belt tension roller in the spinning machine and/or the adjustment jig is provided for adjusting the contact pressure applied by the belt tension roller, in particular using a standardized tool such as a screwdriver or a hex key. The measuring jig and the adjustment jig may be connected or built as a single module, however preferably the measuring jig and the adjustment jig are separate assemblies independently from the other jig. Preferably, the measuring jig and the adjustment jig are provided to be used simultaneously at one belt tension roller to adjust the contact pressure and accordingly the belt tension while measuring at least the force applied by the belt tension roller.

The measuring jig and/or the adjustment jig are preferably made of metal and/or polymer. Additionally prefered, the measuring jig and/or the adjustment jig has a base frame made of metal, particularly prefered made of sheet metal and especially prefered made of a single piece of metal. Alternatively, the base frame may be made of several metal sheets inseparably connected to one another. Further, the measuring jig and/or the adjustment jig are adapted and in particular designed for one specific spinning machine and/or one type of belt tension roller.

The measuring jig comprises two rotor support plates with positioning points on the surface, wherein each of the rotor support plates is built to be positioned on the surface of a rotor of two neighboring spinboxes. Accordingly, the rotor support plates are used to fix the position of the measuring jig, in particular in a direction opposite to and/or against the direction of the contact pressure applied by the belt tension roller. Preferably, the distance and/or the positioning of both roller support plates are adjusted to the spinning machine and in particular to the arrangement of the spinning boxes and/or the rotors of neighboring spinning boxes.

The positioning point of the rotor support plate is an area, preferably a small circular or rectangular area, where the rotor support plate is in direct contact with the rotor - in case of an adjustment without an installed tangential belt - or is in contact with the tangential belt directly opposite to or preferably above the rotor - in case of an adjustment with an installed tangential belt. The positioning points are provided for alignment of the measuring jig with the rotors of the spinboxes. It is prefered, that each of the positioning points is arranged on top and/or at one end of the rotor support plates, wherein this end is most preferably opposing the end of the rotor support plate arranged at or fixed to the measuring jig. To decrease the area of the positioning point and/or to increase the precision of the positioning, the surface of each rotor support plate to be brought in contact with the roller or the tangential belt is curved, in particular in a direction perpendicular to the longitudinal direction of the tangential belt and/or with the middle of the rotor support plate towards the tangential belt.

The measuring probe comprises a measuring point at the surface and is intended for measuring the contact pressure directly or indirectly applied to the surface at the measuring point, in particular via the tangential belt. The measuring probe may be an actively measuring component, such as a pressure or force sensor or pressure transducer, or a passive element mechanically transmitting the pressure to a position, to be measured there by a corresponding meter, in particular a tensometric meter. A tensometric meter is generally any meter which can measure pressure or force applied to a surface, in particular of a sensor. Further, the measuring probe may be connected to, arranged on or comprising a pressure or force sensor.

The measuring point of the measuring probe is an area, preferably a small circular or rectangular area, where the measuring probe is in a direct contact with the belt tension roller - in case of an adjustment without an installed tangential belt - or is in contact with the tangential belt directly opposite to or preferably below the belt tension roller - in case of an adjustment with an installed tangential belt. It is prefered, that the measuring point is arranged on top and/or at one end of the measuring probe, which is most preferably opposing the end of the measuring probe arranged at or fixed to the measuring jig. To decrease the area of the measuring point and/or to increase the precision of the positioning, the surface of the measuring probe to be brought in contact with the belt tension roller or the tangential belt is curved, in particular in a direction perpendicular to the longitudinal direction of the tangential belt and/or with the middle of the rotor support plate towards the tangential belt.

According to the invention, the measuring point is arranged between both positioning points. This refers to at least one spatial direction, preferably in a longitudinal direction of the tangential belt. Accordingly, the measuring point may be arranged at any position along either side of the tangential belt as long as the first positioning point is on one side and the second positioning point is on the other side of the measuring point. According to the invention, the two rotor support plates are arranged with the two positioning points facing one direction and the measuring probe is arranged on the measuring jig with the measuring point facing the exact opposite direction. For example, the measuring points may be facing downwards while the measuring point may be facing upwards. It is particularly prefered that in a direction along the measuring probe and/ or along the rotor support plates and/or orthogonal to the tangential belt both the measuring probe and the rotor support plates are arranged with the measuring point and the positioning points towards one another. It is additionally prefered that the measuring probe and the rotor support plates are arranged in parallel and/or that the center axis of the measuring probe and the rotor support plates are arranged in parallel.

The adjustment jig comprises at least two positioning elements which are provided for mounting the adjustment jig to the spinning machine to allow an adjustment of the belt tension roller or a mechanism of the belt tension roller pressing the belt tension roller towards the tangential belt. The positioning elements may have any shape and may be made of any material. Preferably, the positioning elements are made of the same material as the adjustment jig, most preferably metal. It is prefered that the positioning elements are provided for a form-fit connection to a part of the spinning machine. It is further prefered that at least two, most preferably all positioning elements are identical to one another.

The adjustment jig is preferably built to be arranged on a part, in particular a wall, of the spinning machine or the spinbox opposing the belt tension roller. It is most prefered that the adjustment jig can be mounted with the positioning elements opposing the measuring jig so that with the measuring jig the contact pressure of the belt tension roller can be measured while being adjusted with the adjustment jig.

To adjust the belt tension roller, the adjustment jig comprises an adjustment mechanism for adjusting the contact pressure of the belt tension roller. The mechanism may comprise one or several gears and may be operable with any tool. Preferably, the adjustment mechanism has a socket for a tool on one side and on the other side and/or between parts of a base frame of the adjustment jig at least one gear, connected to the socket for the tool.

In the inventive method it is prefered that the measuring jig is adjusted and/or calibrated in a vertical position, in particular with both rotor support plates at the same height, before mounting the measuring jig to a spinning machine. It is further prefered that the force applied to all rotors by the tangential belt should be identical, in particular between 15 N and 18 N. Accordingly, the pressure value reading of the tensometric meter after mounting the measuring jig on the rotors of the spinning machine should be 30 N to 36 N since it is measured in the center between two rotors.

According to a prefered embodiment of the adjustment device the rotor support plates are provided to be brought in contact with a first side of a tangential belt, in particular each rotor support plate at a rotor of a spinbox, and the measuring probe is provided to be brought in contact at the measuring point with the opposing side of the tangential belt at the belt tension roller applying force towards the measuring point. The arrangement of the rotor support plates and the measuring probe allows advantageously to easily mount the measuring jig in the spinning machine and at the same time to support the measuring probe against the forces applied by the belt tension roller.

It is further prefered that the positioning points of the rotor support plates and the measuring point of the measuring probe are arranged in a line, wherein preferably the distance between both positioning points and the measuring point in a direction perpendicular to the line equals the height of a tangential belt advantageously allowing to easily mount the measuring jig without applying any forces to the tangential belt since the tangential belt does not have to be bend during the mounting. The height of a tangential belt is typically between 0,5 and 20 mm, preferably between 1 and 10 mm, particularly prefered between 1 and 5 mm and accordingly, the distance between the measuring point of the measuring probe and the positioning points of the rotor support plates are equivalent to the height of the tangential belt.

In an advantageous embodiment of the measuring device the measuring probe is located in the middle of a line between both rotor support plates. This embodiment is prefered since the force transmitted from the rotor support plates to the rotors to hold the measuring jig against the contact pressure of the belt tension roller in one position is the same at both rollers and accordingly there is no tendency of the measuring jig to tilt or rotate during the measurement. Preferably, the distance in a longitudinal direction of the tangential belt of the measuring point to both rotor support plates and in particular to the positioning points of the rotor support plates is exactly the same. The middle of a line means generally the middle in at least in one spatial direction and accordingly, there might be an offset in at least a second spatial direction from the line. It is also possible that the measuring probe is shifted towards one of the rotor support plates along the line, in particular to adapt the measuring jig to the position of the belt tension roller relative to the rollers of the spinboxes.

Further, an embodiment of the adjustment device is prefered where a magnetic holder is arranged to a frame of the measuring jig for attachment to the belt tension roller or a fixture thereof, which allows not only the mounting of the measuring jig to the rollers and/or tangential belt of the spinning machine, but also to the belt tension roller leading to a particularly precise measurement. The magnetic holder may comprise a permanent magnet or an electromagnet. It is specially prefered that the magnetic holder is arranged for a magnetic attachment perpendicular to a line between both rotor support plates, in particular between the positioning points, and/or perpendicular to the direction of measurement at the measuring probe, in particular at the measuring point.

It is in particular prefered that the magnetic holder is slidably supported in the direction of measurement above the measuring point, preferably in an elongated hole of a frame of the measuring jig. The slidable support advantageously allows to decouple the measurement from forces of the magnetic holder interacting with the belt tension roller and/or to secure the measuring jig against torsion between the measuring probe and the belt tension roller. Also preferably, the magnetic holder is free to rotate in one direction and/or within the elongated hole to minimize any torsional forces between the magnetic holder and the belt tension roller.

According to an advantageous embodiment of the adjustment device both rotor support plates are identical, in particular identical in shape, size and/or material. Additionally, both rotor support plates are preferably arranged in the same height in the direction of measurement relative to the measuring point allowing a symmetric support of the measuring jig on the rollers and accordingly an even load at both rollers allowing a precise measurement at the measuring probe.

The contact pressure applied by the belt tension roller may be measured at any point of the measuring jig, however preferably it is measured at the bottom of the measuring probe opposite to the measuring point, wherein the bottom is particularly prefered attached to a force sensor. Accordingly, the measuring probe of such an embodiment is a passive component of the measuring jig mechanically transmitting the pressure to the force sensor. It is further prefered that the measuring jig has a connector for a tensometric meter, wherein the measuring jig most preferably comprises a sensor which can be connected and read by the tensometric meter.

An adjustment device having a spacer plate insertable under the measuring probe for measurements in a spinning machine without installed tangential belt is prefered, wherein the spacer plate can preferably be fixed with screws holding the measuring probe. Such a removable spacer allows to adjust the measuring jig to different belt heights or to a measurement without a belt. Preferably the spacer plate can be inserted between the measuring probe and the sensor. The spacer plate might also be attachable to a frame of the measuring jig for a measurement without an installed tangential belt. The spacer plate might be made of any material and have any shape and size. Preferably the spacer plate is made of the same material as the measuring probe and/or the measuring jig. It is even more prefered that the spacer plate has a height corresponding to a tangential belt and/or the dimensions of the footprint of the measuring probe.

To further secure the measuring jig against tilting or any movement, a second holder is attached to the frame of the measuring jig with a contact plate at one end to be brought in contact with a mounting or fixture of the belt tension roller in the spinbox, wherein preferably the length of the second holder is adjustable and accordingly the measuring jig can first be easily mounted and afterwards the contact plate can be brought in contact with the mounting or fixture of the belt tension roller further securing the measuring jig. It is particularly prefered that the second holder has no influence on the measurement. Therefore, the holder and/or the adjustment plate are preferably only for a stable positioning of the measuring jig in the spinbox. The adjustment of the length of the second holder can be achieved by any technical means, preferably with a telescope arm or rod which is preferably arranged and/or length-adjustable perpendicular to the contact plate.

According to a prefered embodiment of the adjustment device the positioning elements of the adjustment jig are tubular holders for screw heads for fastening the belt tension roller or a fixture thereof to the spinbox, allowing a particularly fast and easy mounting of the adjustment jig. The screw heads are preferably round heads of M6 screws, in particular with a hex socket and accordingly the tubular holders have a corresponding diameter for a form-fit connection. The adjustment tool is preferably built to be installed on the opposite side of housing of the spinbox than the belt tension roller. It is especially prefered that before the adjustment jig is positioned on the screw heads, the screws of the belt tension roller are opened or loosened slightly, preferably with a hex key and in particular with the hex key for adjusting an adjustment gear wheel with a hex socket of the adjustment jig. After the positioning of the adjustment jig the screws are fastened again with the screw heads inside the tubular holders leading to a particularly fixed connection without tensions.

It is finally prefered that the adjustment mechanism of the adjustment jig comprises an adjustment gear wheel with a hex socket for a hex key allowing an easy adjustment of the belt tension roller. The adjustment gear wheel may be mounted at any position and in any manner on the adjustment jig. Preferably, the adjustment gear wheel is mounted with an axle to the adjustment jig, wherein the socket for the tool is more preferably arranged on the axle. Further, the adjustment gear wheel has gears on the outer periphery for interaction with a part of the mechanism providing the contact pressure to the belt tension roller having a corresponding gearing. Most preferably the adjustment gear wheel is pivoted between a first and a second frame plate of the adjustment jig, wherein both frame plates are in particular preferably arranged in parallel.

These and other aspects of the invention will be apparent from and elucidated with reference to the embodiments described hereinafter.
- Fig. 1: shows a perspective view of a measuring jig of an adjustment device according to a first embodiment,
- Fig. 2: shows a side view of the measuring jig according to the first embodiment,
- Fig. 3a: shows a perspective front side view of a measuring jig according to a second embodiment with a second holder in a retracted position,
- Fig. 3b: shows a perspective front side view of the measuring jig according to the second embodiment with the second holder in an extracted position,
- Fig. 3c: shows a front side view of the measuring jig according to the second embodiment,
- Fig. 4a: shows a perspective rear side view of the measuring jig according to the second embodiment with the second holder in a retracted position,
- Fig. 4b: shows a perspective rear side view of the measuring jig according to the second embodiment with the second holder in an extracted position,
- Fig. 5: shows a perspective front side view of a measuring jig according to a third embodiment, and
- Fig. 6: shows a perspective side view of an adjustment jig of the adjustment device.

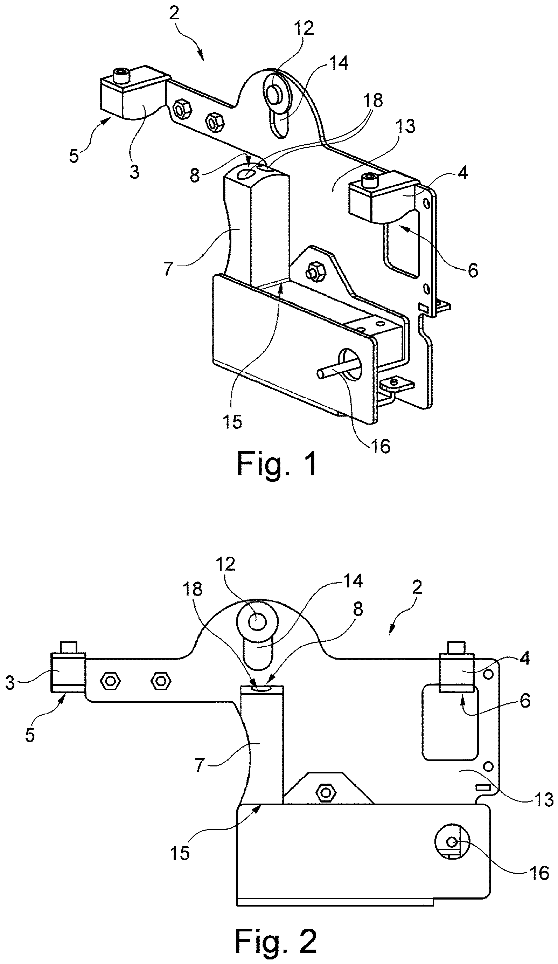

A first embodiment of a measuring jig 2 of an adjustment device comprises two rotor support plates 3, 4 attached by screws to a frame 13 of the measuring jig 2 (see fig. 1 and 2). In the middle between the rotor support plates 3, 4 a measuring probe 7 is arranged facing the opposite direction than the rotor support plates 3, 4. The first and the second rotor support plates 3, 4 are identical and are arranged on an identical height on the frame 13. The surface of the rotor support plates 3, 4 facing the measuring probe 7 are curved and have a positioning point 5, 6 at the center, which is intended to be brought in contact with the surface of a rotor of a spinning machine, more precisely of a spinbox of a spinning machine.

The measuring probe 7 has an equally curved surface facing the rotor support plates 3, 4 with a measuring point 8 at the center. The measuring point 8 is intendent to be brought in contact with a belt tension roller, which is provided in a spinning machine to tense a tangential belt driving the rotors of the spinboxes. At the bottom 15 of the measuring probe 7 opposite to the measuring point 8 a sensor for measuring force is attached and the measuring jig 2 comprises a connector 16 for a tensometric meter to get pressure readings from the sensor. The measuring probe 7 is connected to the sensor and accordingly to the measuring jig 2 with two screws 18 arranged in openings on both sides next to the measuring point 8.

The measuring probe 7 is arranged precisely in the middle between both rotor support plates 3, 4 in a first spatial direction along a line between both rotor support plates 3, 4. In a spatial direction along the measuring probe 7 and orthogonal to the first direction, the surface of the measuring probe 7 with the measuring point 8 has a distance to the surfaces of each of the rotor support plates 3, 4 with the positioning points 5, 6 equivalent to the height of a tangential belt of the spinning machine to be measured.

Further, the frame 13 of the measuring jig 2 comprises a magnetic holder 12 arranged in an elongated hole 14 arranged above the measuring probe 7. The magnetic holder 12 can be slid in the elongated hole 14 towards the measuring probe 7 to avoid any influences of the magnetic holder 12 to the measurement of a belt tension roller.

To measure the contact pressure applied to the surface of a tangential belt of a spinning machine by a belt tension roller in the middle between two rotors of neighbouring spinboxes of the spinning machine, first the measuring jig 2 is placed on an even ground and is calibrated and/or adjusted with a setting gauge. Afterwards the measuring jig 2 is connected via the connector 16 to a tensometric meter and the displayed pressure is set to zero. The measuring jig 2 is then placed with each of the rotor support plates 3, 4 with the positioning points 5, 6 precisely on a rotor of two neighboring spinboxes. At the same time the measuring probe 7 is brought in contact with the tangential belt of the spinning machine with the measuring point 8 exactly on an opposite side of the tangential belt to the belt tension roller. The belt tension roller is brought in contact with the magnetic holder 12. Finally, the contact pressure applied to the surface of the tangential belt and accordingly to the measuring probe 7 can be measured and is supposed to be in a range between 31 N and 35 N. If the contact pressure is not in the supposed range, the belt tension roller has to be adjusted using an adjustment jig 9 of the adjustment device.

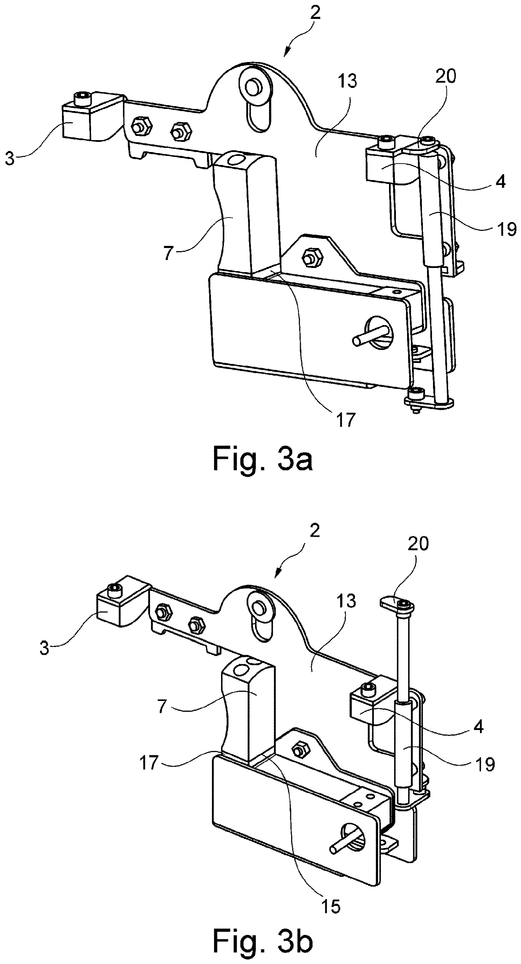

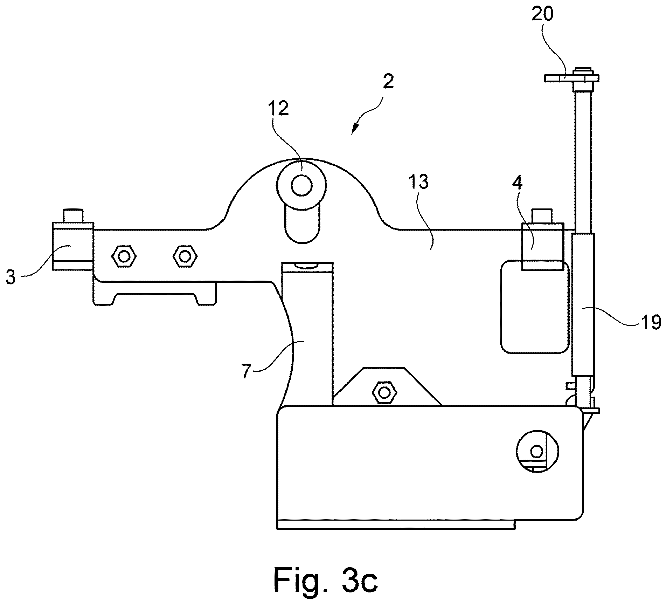

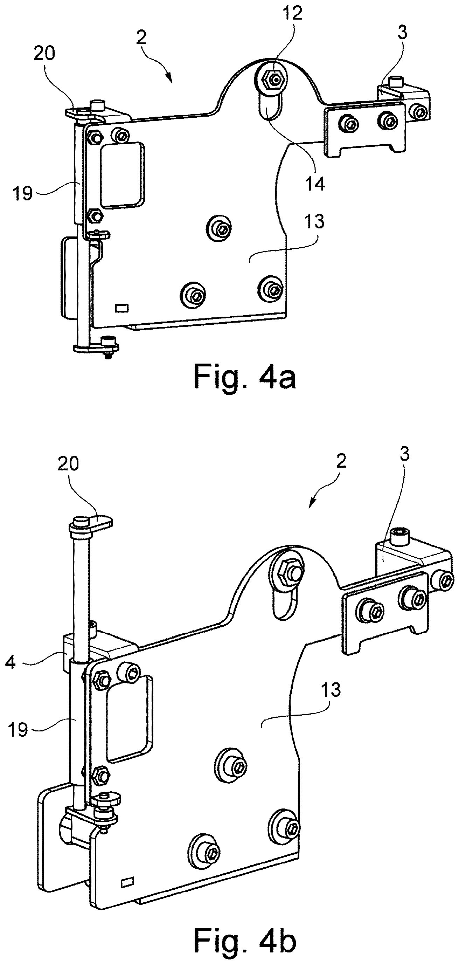

To ensure a solidly fixed arrangement of the measuring jig 2 to the spinning machine there might be a second holder 19 attached to the frame 13 of the measuring jig 2 (see fig. 3a-c and 4a, b). The second holder 19 comprises a telescopic rod with a contact plate 20 to be brought in contact with the spinbox before the measurement.

Additionally, to be able to measure the contact pressure of a belt tension roller without a tangential belt installed in the spinning machine, a spacer plate 17 might be arranged between the measuring probe 7 and the sensor (see fig. 3a-c). The spacer plate 17 might be fixed by the screws 18 holding the measuring probe 7. The thickness of the spacer plate 17 corresponds to the thickness of the tangential belt and accordingly the measuring point 8 of the measuring probe 7 with the spacer plate 17 is moved towards the rotor support plates 3, 4 so that a measurement without a tangential belt is possible.

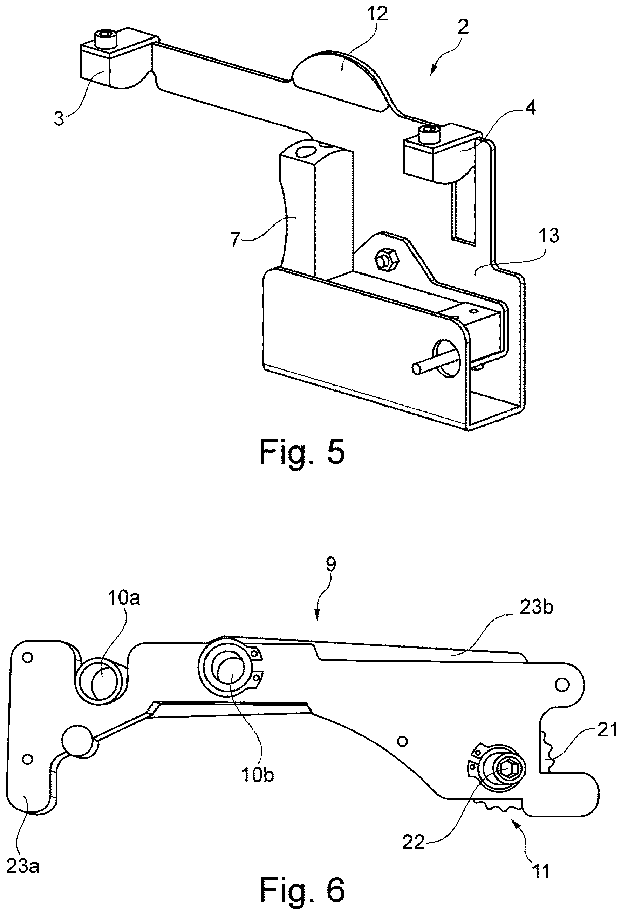

If the belt tension roller is not arranged in the middle between two neighbouring rollers of spinboxes, the first and/or second rotor support plate 3, 4 might be shifted accordingly as shown in figure 5. Additionally, the magnetic holder 12 might not be arranged movable in an elongated hole 14, but instead directly on the surface of the frame 13 of the measuring jig 2.

The adjustment jig 9 comprises two tubular positioning elements 10a, b to fix the adjustment jig 9 to the spinning machine. The positioning elements 10a, b are particularly provided for a form-fit fix to heads of crews extending from a surface of the spinning machine. Further, the adjustment jig 9 comprises an adjustment mechanism 11. The adjustment mechanism 11 comprises an adjustment gear wheel 21 arranged on an axle between two parallel frame plates 23a, b of the adjustment jig 9, wherein the axle extends trough the frame plates 23a, b and has a hex socket 22 on one side to be operated with a hex key.

To adjust the contact pressure applied to the tangential belt of a spinning machine, the adjustment jig 9 is arranged on a side of a frame of the spinning machine opposing the measuring jig 2 as well as the belt tension roller. To do so, two screws of the spinning machine are slightly loosened and the tubular positioning elements 10a, b are placed on the heads of the loosened screws. Afterwards the screws are tightened. In this position, the adjustment gear wheel 21 of the adjustment jig 9 is in contact with a mechanism forcing the belt tension roller towards the tangential belt and by turning the adjustment gear wheel 21 using a hex key in the hex socket 22, the contact pressure can be adjusted while being measured by the measuring jig 2. As soon as the contact pressure is adjusted, the adjustment device including the measuring jig 2 and the adjustment jig 9 can be removed from the spinning machine.

### List of reference signs

- 2: measuring jig
- 3: first rotor support plate
- 4: second rotor support plate
- 5: first positioning point
- 6: second positioning point
- 7: measuring probe
- 8: measuring point
- 9: adjustment jig
- 10a, b: positioning elements
- 11: adjustment mechanism
- 12: magnetic holder
- 13: frame
- 14: elongated hole
- 15: bottom of measuring probe
- 16: connector
- 17: spacer plate
- 18: screws
- 19: second holder
- 20: contact plate
- 21: adjustment gear wheel
- 22: hex socket
- 23a, b: first and second frame plate

## Claims

1. Adjustment device for adjusting the contact pressure applied to a tangential belt by a belt tension roller of a spinning machine between the rotors of two neighbouring spinboxes, with
- a measuring jig (2) for measuring the contact pressure of the belt tension roller,
- the measuring jig comprising two rotor support plates (3, 4) with positioning points (5 ,6) for reference to the rotor positions and one measuring probe (7) with a measuring point (8) arranged between both positioning points (5, 6),
- the two rotor support plates (3, 4) being arranged in an opposing direction to the measuring probe (7) for securing the position of the measuring jig (2) against the pressure of the belt tension roller applied to the measuring probe (7) at the measuring point (8),
- an adjustment jig (9) for adjusting the contact pressure of the belt tension roller,
- the adjustment jig (9) comprising at least two positioning elements (10a, b) for mounting the adjustment jig (9) to the spinning machine, in particular to a wall of the spinbox opposite to the position of the belt tension roller or the measuring jig, as well as
- an adjustment mechanism (11) for adjusting the contact pressure of the belt tension roller.

2. Adjustment device according to claim 1, wherein the rotor support plates (3, 4) are provided to be brought in contact with a first side of a tangential belt at a rotor of a spinbox and the measuring probe (7) is provided to be brought in contact with the opposing side of the tangential belt at the belt tension roller.

3. Adjustment device according to one of the above claims, wherein the positioning points (5, 6) of the rotor support plates (3, 4) and the measuring point (8) of the measuring probe (7) are arranged in a line, wherein the distance between both positioning points (5, 6) and the measuring point (8) in a direction perpendicular to the line equals the height of a tangential belt.

4. Adjustment device according to one of the above claims, wherein the measuring probe (7) is located in the middle of a line between both rotor support plates (3, 4).

5. Adjustment device according to one of the above claims, wherein a magnetic holder (12) is arranged to a frame (13) of the measuring jig (2) for attachment to the belt tension roller or a mounting thereof.

6. Adjustment device according to one of the above claims, wherein the magnetic holder (12) is supported slidably in the direction of measurement above the measuring point (8) in an elongated hole (14) of the frame (13).

7. Adjustment device according to one of the above claims, wherein both rotor support plates (3, 4) are identical and are arranged in the same height in the direction of measurement relative to the measuring point (8).

8. Adjustment device according to one of the above claims, wherein the bottom (15) of the measuring probe (7) opposite to the measuring point (8) is attached to a force sensor and the measuring jig (2) has a connector (16) for a tensometric meter.

9. Adjustment device according to one of the above claims, wherein a spacer plate (17) is insertable under the measuring probe (7) for measurements in a spinning machine without installed tangential belt and can be fixed with screws (18) holding the measuring probe (7).

10. Adjustment device according to one of the above claims, wherein a second holder (19) is attached to the frame (13) of the measuring jig (2) with a contact plate (20) at one end for being brought in contact with a mounting of the belt tension roller, wherein the length of the second holder (19) is adjustable.

11. Adjustment device according to one of the above claims, wherein the positioning elements (10a, b) of the adjustment jig (9) are tubular holders for screw heads for fastening the belt tension roller or a mounting thereof.

12. Adjustment device according to one of the above claims, wherein the adjustment mechanism (11) comprises an adjustment gear wheel (21) with a hex socket (22).

13. Adjustment device according to one of the above claims, wherein the adjustment gear wheel (21) is pivoted between a first and a second frame plate (23a, b) of the adjustment jig (9), wherein both frame plates (23a, b) are arranged in parallel.

14. Method for adjusting the contact pressure applied by a belt tension roller to a tangential belt of a spinning machine between the rotors of two neighbouring spinboxes, with the steps:
- mounting a measuring jig (2), in particular according to one of the above claims, by positioning each of the two rotor support plates (3, 4) on neighbouring rotors of the spinning machine and a measuring probe (7) in contact with a belt tension roller,
- connecting a tensometric meter to the measuring jig (2) and measuring the force applied by the belt tension roller,
- mounting an adjustment jig (9), in particular according to one of the above claims, by positioning two positioning elements (10a, b) on the spinning machine, and
- adjusting the tension of the belt tension roller with the adjustment jig (9) and simultaneously getting readings of the tension force with the measuring jig (2).
